# EUROPEAN PATENT SPECIFICATION

(11) **EP 2 975 140 B1**
(45) Date of publication and mention of the grant of the patent: **27.03.2019**
(21) Application number: 15474002.1
(22) Date of filing: 04.06.2015
(51) Int. Cl.: C22B 1/24, C22B 1/242, C22B 7/04

(54) **THE METHOD OF RECYCLING OF SECONDARY SLAG IN THE PRIMARY SMELTING OF IRON**
WIEDERAUFBEREITUNG DER SEKUNDÄRSCHLACKE IM PRIMÄRSCHMELZVERFAHREN
UN PROCÉDÉ DE RECYCLAGE DE SCORIES SECONDAIRE DANS LA PREMIÈRE FUSION

(30) Priority: 04.06.2014 SK 392014; 04.06.2014 SK 752014
(43) Date of publication of application: 20.01.2016
(73) Proprietor: Ecofirm s.r.o., 010 08 Zilina (SK)
(72) Inventor: Jancovic, Peter, 929 01 Dunajská Streda (SK)
(74) Representative: Záthurecký, Eugen

(56) References cited:
- CN-A- 101 845 536
- US-A1- 2009 049 955

## Description

### The area of technology:

The invention relates to the method of recycling of secondary slag in the primary smelting of iron.

### Existing condition of technology

The slag is formed during each smelting of metal as the waste, or secondary product, while it has characteristics that allow proper melting of the metal charge and treatment of chemical composition of the liquid metal. Additives assist in forming of slag which are added on/into molten metal for the purpose of purification from the undesirable elements.

After primary smelting of iron charge, melted iron is refined for the first time and so called crude steel is arising. It is further poured into the second, so-called ladle furnace (LF) / holding furnace and the like, where it is treated for the second time - the secondary refinement. Lime, magnesium mixtures, aluminium, ferro-alloys additives are used for refinement binding unwanted elements such as phosphorus, sulphur, hydrogen, oxygen, etc. It is still possible to treat liquid metal adding legurs to achieve desired chemical composition, and then poured into a final product or semi-finished product.

The primary slag is processed after cooling by mechanical treatment, outputs of which are separated metal and steel slag aggregate.

The slag from secondary refining - the secondary slag, called also the CaO slag or the refining slag, has after cooling quite a different character than the primary slag. It is disintegrating and loose, while it comprises particles / pieces of mineral nature (Table 1), metallic inclusions, metal recoveries, or residual metal. It is usually de-metallized after cooling and residual not metallic part deposited.

Important factor and unique feature of secondary slag is its dimensional variability. Particles of slag are disintegrating to finer fraction over the time and due to impact of natural environmental conditions. The time of disintegration varies while it is commonly cooled to temperature of surrounding air up to time of one week since its arising. Some technologies use such behaviour of slags to stabilization of concrete products like e.g. ACERITA* process which is based on watering the slag with water, which causes hydration of active CaO and stabilization of slag due to it.

The method of recycling of refining slag in RH (Ruhrstahl Heraeus) furnace is described in document CN102994703 A 20130327, where the method includes following steps - cooling down of refining slag, crushing and sorting, de-metallization, compaction - ball pressing, adding into the process in RH furnace, composition of refining slag is described further. In this case it is refining (LF slag) from RH furnace, which is processed in similar way like proposed and will be used again into the same furnace. The process of smelting runs in vacuum. It is added only 10 kg of slag per 1 t of melted metal. The result is the improvement of refining abilities of the slag. Solution of CN 102994703 suggests a way of recycling slag arising during refining of liquid metal in the RH furnace, which has its specific characteristics. Large amount of unwanted hydrogen, oxygen and other gases that cause cavities, cracks or brittle cracking of the metal is removed in RH furnace in vacuum.

The way of recycling of refining slag during smelting of steel scrap, where the method includes following steps - natural cooling, de-metallization, crushing and sorting is described in document CN103045778 A 20130417, using of refining slag having fraction of 5-30 mm with specified chemical composition is described further. Amount of 2-3 kg of refining slag per ton and the time during which the refining slag is used is also determined. There is also similar method of processing in document CN 103045778 A. The document deals with production of carbon steel in the converter and the slag is added in the amount of 2-3 kg / 1 ton during pouring from converter into furnace (casting).

The method and additive for refining of steel is mentioned in document US5397379 A 19950314, wherein the use of granules and briquettes made from recycled refining slag is mentioned, hereinafter is described advantageous composition of refining slag. The LF slag is used in this case as fluidizing (liquidizing) additive into slag additives. The slag has resulting chemical characteristics according to nature of the steel and it is mentioned in the document that the slag should be used as an additive within the framework of steel production of the same nature. It means that the slag from production of carbon steels should be used only in production of carbon steel. Solution described in US5397379 utilizes refining slag with addition of refining additives in certain ratio as additive creating slag having a low melting point. It is possible to use additive for de-sulphurization of slag, like the slag conditioner or like synthetic or refining slag.

The LF slag according to this solution works as effective fluidization additive for raw materials such as CaO.

Composition of slag like agent for LF furnaces for refining of smelted iron and the way of its production is described in document CN101845536 20100929, where chemical composition is mentioned. The way of preparation includes following steps - processing of LF refining slag with active lime to loose mixture having the size of fraction from 0.5 to 3 mm, dry pressing, forming granules in the size from 25 to 30 mm and its subsequent waterproof packing. The amount of additive per ton of iron is mentioned further. Document CN 101845536 A deals with production of agent by adding other additives. The solution in CN 101845536 A describes a way of preparation of refining slag, which consists of mixture of a slag, lime and soda in different ratios. This mixture is mechanical treatment processed to required fraction from 0.5 to 3 mm, which is subsequently briquetted into the solid shape. Document CN 101845536 A defines several combinations of concentrations of input materials, so that resulting chemical composition would be suitable for use in LF furnace during refining of raw steel. A drawback of the solution is necessity to maintain products produced in this way in the environment free of moisture. In this method, it is added to liquid metal during the process of pouring into the LF furnace, max. 6 kg of slag mixture per 1000 kg of metal.

Using of CaO slag from ladle furnace described "Prof. Mihok in Hutnicke listy 2002/4-5 - Recyklácia demetalizovanej trosky z elektrickej oblukovej pece (Recycling of de-metallized slag from electric arc furnace)". Using of refining slag in primary smelting of steel directly pointed to positive influence to de-sulphurization and de-phosphorization. However, this research never reached real character due to heterogeneous structure of slag and problematic charging into furnace.

The secondary slag is used to production of slag cements due to favourable chemical composition . But significantly higher costs to manipulation to the cement plant as costs to mining of traditional material is disadvantage. Therefore it is more effective to landfill this valuable material in many countries.

Document US2009049955 A1 20090226 describes a recovery of the secondary metallurgy slag from a steel production plant involves cooling the slag by passage of air and/or other gas, than transforming phases present in the mass into powder and drawing the powder.

Recovery and recycling of residues of the steel production process to an electric arc furnace (EAF) or other secondary metallurgy under slag process comprise recovery of the slag, selection and collection of the treated material, and pneumatic injection of the treated material into the electric arc oven or other secondary metallurgy under slag process.

The method according US2009049955 A1 20090226 includes accelerated breakdown of the slag by forced cooling through cooling fluid, by insufflation of a reaction gas or by overturning and/or vibration of the slag mass itself. The breakdown of the slag occurs by overturning from one grating to another in the same module or by vibration of at least one support grating in a controlled environment and atmosphere. The selection and collection step comprises deferrization process and a dimensional screening process.

Document US2009049955 A1 20090226 describes a recovery of the secondary metallurgy slag from a steel production plant involves cooling the slag by passage of air and/or other gas, than transforming phases present in the mass into powder and drawing the powder.

Recovery and recycling of residues of the steel production process to an electric arc furnace (EAF) or other secondary metallurgy under slag process comprise recovery of the slag, selection and collection of the treated material, and pneumatic injection of the treated material into the electric arc oven or other secondary metallurgy under slag process.

The method according US2009049955 A1 20090226 includes accelerated breakdown of the slag by forced cooling through cooling fluid, by insufflation of a reaction gas or by overturning and/or vibration of the slag mass itself. The breakdown of the slag occurs by overturning from one grating to another in the same module or by vibration of at least one support grating in a controlled environment and atmosphere. The selection and collection step comprises deferrization process and a dimensional screening process.

### Disclosure of invention

Mentioned disadvantages are considerably eliminated by the method of recycling of secondary slag in primary smelting of iron, so production of additives from the slag from secondary refining of the steel, which consist of mechanical processing into the form of briquettes, aggregate and residual metal by non-thermal way. The purpose is to convert the waste from the secondary refining of steel into the solid form, so it could be charged into the furnace in the primary smelting of iron, so to achieve a product of stable shape, strength and chemical composition.

Slag from ladle furnace (LF) - the secondary slag in proposed method is not used again after processing at the same level of steel production, but in the primary smelting - i.e. in re-smelting of metal (solid, not liquid) charge. The volume of charged processed secondary slag in the form of solid particles is many times higher than in previously known processes, resulting in much higher economic and environmental benefits. It is not necessary to add other additives, or additives creating slag, respectively, to the mixture in production of briquettes in proposed method against comparison to the state-of-the art. It is possible to use, after mechanical preparation for particular fractions, the secondary slag in original condition without previous treatment. It is possible to add additives into briquetted mixture to reduce input costs, because under-sieve materials have lower purchase price then piece. Another advantage of proposed method is based mainly in the fact, that after smelting of metal charge (primary smelting), the "recycled product" from secondary slag comes to the top of melted raw steel and it has due to it a primary coating effect instead of purification and fluidizing effects, etc. It is due to the fact, that recycled secondary slag has less active ingredients than pure additives creating slag, but it has not negative influence to process of primary smelting of metal charge by its composition. But it is advantageous to use recycled secondary slag, because it will ensure cover function and it replaces many of pure additives creating slag.

**Tab. 1**

| Typical chemical composition of slag from secondary refining of steel | |
|---|---|
| Ingredient | % by weight |
| Fe tot. | 0-35 |
| MnO | 0-5 |
| S₁0₂ | 2-35 |
| CaO | 15-85 |
| MgO | 0-15 |
| Al₂0₃ | 1.5-35 |
| P₂0 | 0-3 |
| Cr₂0₃ | 0-2 |
| S | 0-1.5 |
| other additives | 0-15 |

**Tab. 2**

| Example of fractional composition of processed waste | |
|---|---|
| Fraction [mm] | % by weight |
| over 8 | 10.01 |
| 8-4 | 8.53 |
| 4 -2 | 12.06 |
| 2-1.2 | 11.50 |
| 1.2-0.71 | 8.91 |
| 0.71-0 | 48.99 |

The secondary slag, since its formation, is cooling down to temperature of surrounding air for several days to weeks. It is subsequently de-metallized - i.e. ferritic (magnetic) particles which are used like metallic charge together with other scrap are separated by magnet.

De-metallized secondary slag is mechanically processed and sorted into different outputs according to character: I) The over-sieve slag of 12-50 mm fraction, II) under-sieve slag of 0-12 mm fraction, III) separated metal from over-sieve slag IV) separated metal from under-sieve slag.

Other three outputs, except under-sieve slag of 0-12 fraction, are directly usable into charge in steel production. Metal outputs are used as scrap and slag over-sieve slag of 12-50 mm fraction is used as a partial replacement of lime.

Under-sieve slag of 0-12 mm fraction is processed in the way of compacting into mechanically stable form and strength, so it would be possible to charge it into furnace and it is charged together with over-sieve slag of 12-50 mm fraction.

The proportion of non-metallic particles of secondary slag to metallic particles is from 2 to 99% by weight. Particular fractions of outputs are not strictly prescribed. Fractional composition is selected according to technological possibilities of compacting device and also by requirements to the size of input raw materials into melting unit of steelworks. If charging raw material would be to small, it would be burnt during the process of charging. If it would be too big, it need not to be melted entirely during the process of melting. It is possible to implement next degree of sorting in some cases and another fractions can be obtained. It is true again already mentioned above on the subsequent utilization in the process of smelting.

The output of compacting is briquette/pellet/block or other mechanically strong and dimensionally stable composition of various sizes.

The secondary slag is processed to given outputs so it could be possible to use it further in primary smelting of steel - i.e. for smelting of metal charge (scrap steel, pig iron, other steel waste, etc.), for the purpose to replace the lime which is used together with other additives for refining (so called primary treatment/steel refining -> the output is raw steel). The slag from primary smelting is commonly used as Steel Slag Aggregate (SSA).

The cycle described in simplified way so that it is possible to use the waste from secondary/final treatment as a raw material in the primary smelting - the secondary slag has chemical composition suitable to be possible to use in the primary smelting in certain volume instead of lime.

The example of altering the lime with the slag:
The secondary slag partly comprises the lime because it arises except of other additives from added the pure lime into the smelt. But it is possible to add the pure lime also into secondary slag before compacting into compact form, which will have the effect of binder as well as additive creating the slag in the primary smelting.

It is possible to use combination of 1000 kg of secondary slag + 500-1000 kg of lime in 55-60 tons of raw steel instead of 1600 kg of lime.

The result is, that occurrence of one the waste - the secondary slag disappears, and next, that it is not necessary to use so much lime in the primary smelting of steel, resulting into economic benefits.

### Examples of realization of invention

### Example 1

### Compacting of secondary slag by the way of vibration pressing

The method of recycling of secondary slag in the primary smelting of iron, while the secondary slag is treated by following steps: natural cooling, de-metallization, mechanical processing and sorting, compacting its under-sieve part (0-12 mm) into compact shape, while it is not possible to compact the slag only by the press of vibration press, therefore the binder is added. The binder is Portland cement; its ratio in the mixture is 2-35% by weight. The mixture is mixed for the time necessary to form homogeneous structure with/without addition of little water until achieving of homogeneous mixture. The mixture is formed in forming device - vibration press having common parameters. Ready products are dried on mats 2-14 days under normal atmospheric conditions. The green compressive strength of briquettes is sufficient to not to break in falling down from the height of 2 m, so it would be possible to manipulate with them by heavy machinery. The moistness after drying is on average up to 8%. The secondary slag with metallurgical additives, which are e.g. lime, magnesia mixtures, calcium carbide, limestones, ferro-alloys, is added as an additive into the primary smelting, while under-sieve slag of 0-12 mm fraction which has previously been compacted into a compact form, over-sieve slag of 12-50 mm fraction was used in the original condition without previous treatment. The weight ratio of treated secondary slag against used lime is 1: 0.5-10.

### Example 2

### Compacting of secondary slag by pressing under high pressure.

The method of recycling of secondary slag in the primary smelting of iron, while the secondary slag is treated by following steps: natural cooling, de-metallization, mechanical processing and sorting, compacting its part into compact shape by pressing under high pressure. The high pressure is achieved in cylindrical pressure or in hydraulic piston pressures. It is not necessary to use any binder in such devices which are able to produce such pressure that particles of material are so close to each other that it happens their interrelation ship due to Van der Waals forces. It is not necessary to dry finished products, because the binder is not necessary. The output is always material pressed with such intensity that it has a stable shape and strength to allow handling by heavy machinery. The secondary slag with metallurgical additives, which are e.g. lime, magnesia mixtures, calcium carbide, limestones, ferro-alloys, is added as an additive into the primary smelting, while under-sieve slag of 0-12 mm fraction which has previously been compacted into a compact form, over-sieve slag of 12-50 mm fraction was used in the original condition without previous treatment. The weight ratio of treated secondary slag against used lime is 1: 0.5-10.

### Industrial applicability:

The invention defines the method of recycling of secondary slag in the primary smelting of iron and its recycling into full valuable product that can be used to replace the refining raw materials used in remelting of metal charge in production of steel, such as lime, magnesia mixtures, calcium carbide, ferro alloys, lime, a de-sulphurizers, de-oxidizers and the like.

## Claims

1. The method of recycling of secondary slag in primary smelting of iron while the secondary slag is treated by following steps - natural cooling, de-metallization, mechanical processing and sorting, compaction of its part into a compact form, **characterized in that** the secondary slag with metallurgical additives is added as an additive into the primary smelting of the iron within the mixture with added lime in the weight ratio of 1: 0.5 - 10, wherein the under-sieve slag of 0-12 mm fraction is compacted into the compact form, the over-sieve slag of 12-50 mm fraction is used in original condition without previous treatment.

2. The method of recycling secondary slag in the primary smelting of iron according to claim 1 **characterized in that** the under-sieve slag of 0-12 mm fraction is compacted into the compact form by vibration pressing with addition of 2-35% by weight of the binder and then it is dried from 5 hours to 1-7 days under standard atmospheric conditions, depending on used binder.

3. The method of recycling of secondary slag in the primary smelting of iron according to claim 2 **characterized in that** the binder is Portland cement, molasses, lime, lime milk, magnesium cement, bentonite, or their combinations.

4. The method of recycling of secondary slag in the primary smelting of iron according to claim 1 **characterized in that** the under-sieve slag of 0-12 fraction is compacted into the compact form by pressing under high pressure so that the interrelationship of the particles occurs by Van der Vaals forces.

## Patentansprüche

1. Art der Wiederverwertung der Sekundärschlacke in der primären Eisenverhüttung, wobei die Sekundärschlacke durch folgende Behandlungsschritte - natürliche Abkühlung, Entmetallisierung, mechanische Verarbeitung und Klassierung, Verdichtung eines Teils zu einer kompakten Form - aufbereitet wird, **dadurch gekennzeichnet, dass** die Sekundärschlacke samt den metallurgischen Zusätzen als Zuschlag im Gemisch mit zugegebenem Kalk in einem Gewichtsverhältnis von 1: 0,5-10 der primären Eisenschmelze zugesetzt wird, wobei die Feinschlacke der Fraktion 0-12 mm zu einer kompakten Form verdichtet und die Grobschlacke der Fraktion 12-50 mm im ursprünglichen Zustand ohne Vorbehandlung verwendet wird.

2. Art der Wiederverwertung der Sekundärschlacke in der primären Eisenverhüttung nach Schutzanspruch 1, **dadurch gekennzeichnet, dass** die Feinschlacke der Fraktion 0-12 mm im Rüttel-Press-Verfahren zu einer kompakten Form unter Zugabe von 2-35 Gew.-% Bindemittel verdichtet und anschließend 5 Stunden bis 1-7 Tage in Abhängigkeit vom verwendeten Bindemittel unter normalen Witterungsverhältnissen getrocknet wird.

3. Art der Wiederverwertung der Sekundärschlacke in der primären Eisenverhüttung nach Schutzanspruch 2, **dadurch gekennzeichnet, dass** als Bindemittel Portlandzement, Melasse, Kalk, Kalkmilch, Magnesiamörtel, Bentonit bzw. deren Kombination dienen.

4. Art der Wiederverwertung der Sekundärschlacke in der primären Eisenverhüttung nach Schutzanspruch 1, **dadurch gekennzeichnet, dass** die Feinschlacke der Fraktion 0-12 mm zu einer kompakten Form durch Pressen verdichtet wird, sodass die Teilchen durch Van-der-Waals-Kräfte aneinandergebunden sind.

## Revendications

1. La méthode de recyclage de la scorie secondaire lors de la fusion primaire du fer, tandis que la scorie secondaire est modifiée par les étapes suivantes - le refroidissement naturel, la démétallisation, le traitement et tri mécanique, le compactage d'une partie en forme compacte, qui se **caractérise par** l'ajout de la scorie secondaire avec additifs métallurgiques comme un additif dans la fusion primaire du fer sur un mélange 1: 0,5-10 (en masse) avec chaux ajoutée, tandis que la scorie de fraction au-dessous du tamis 0-12 mm est compactée en forme compacte, la scorie de fraction au-dessus du tamis 12-50 mm s'utilise sans modification préalable.

2. La méthode de recyclage de la scorie secondaire lors de la fusion primaire du fer selon la 1^{e} exigence est **caractérisée par le fait que** la scorie de fraction au-dessous du tamis 0-12 mm est compactée en forme compacte par vibropressage en ajoutant 2-35% (en poids) de liant et ensuite, elle sèche 5 heures ou 1 - 7 jours, en fonction du liant utilisé, dans des conditions atmosphériques normales.

3. La méthode de recyclage de la scorie secondaire lors de la fusion primaire du fer selon la 2^{e} exigence est **caractérisée par le fait que** le liant est du ciment Portland, de la mélasse, de la chaux, du lait de chaux, de la magnésie et de la bentonite, ou bien une combinaison des éléments ci-dessus.

4. La méthode de recyclage de la scorie secondaire lors de la fusion primaire du fer selon la 1^{re} exigence est **caractérisée par le fait que** la scorie de fraction au-dessous du tamis 0-12 mm est compactée en forme compacte par pressage, en créant une interaction entre les particules grâce à la force de van der Waals.
